Europäisches Patentamt

European Patent Office

Office européen des brevets

(19)

(11) Publication number: **0 103 973**
**A2**

# EUROPEAN PATENT APPLICATION

(12)

(21) Application number: **83304619.6**

(22) Date of filing: **10.08.83**

(51) Int. Cl.³: **G 06 F 3/033**

(30) Priority: **24.08.82 GB 8224249**

(43) Date of publication of application:
**28.03.84 Bulletin 84/13**

(84) Designated Contracting States:
**AT CH FR GB IT LI NL SE**

(71) Applicant: **RACAL-SES LIMITED**
**Western Road**
**Bracknell Berkshire(GB)**

(72) Inventor: **Gardner, Brian R.**
**6 Shrublands Charlton Kings**
**Cheltenham Gloucestshire(GB)**

(72) Inventor: **Fox, Timothy N.**
**Aragon 19 Springdale**
**Wokingham Berkshire(GB)**

(74) Representative: **Foster, David Martyn et al,**
**Mathisen, Macara & Co. Lyon House Lyon Road**
**Harrow Middlesex HA1 2ET(GB)**

(54) **Interactive display devices.**

(57) An interactive display device (40) comprises a digitizing table (42) on which an ordinary OS map (48) and an instruction panel (50) are mounted. Positions on the digitizing table (42) can be indicated by a cursor such as a pointer (46) which is coupled to a control and storage means for input of information. A low power laser (62) is arranged such that its beam can be deflected by mirrors (64, 66) to any position on the map (48) on the control of the control and storage means in order to display stored information.

*FIG. 1.*

EP 0 103 973 A2

## INTERACTIVE DISPLAY DEVICES

The present invention relates to interactive display devices comprising a surface for carrying an image, instruction means, control and storage means, indicating means cooperable with the surface and said instruction means to store data relating to the image, and display means for displaying data on the image. Such devices are particularly, but not exclusively , suitable for use in a communications training simulators.

Various such display devices are known, particularly in the computer aided design (CAD) field. A light pen such as described in GB-1471231A is a type of indicating means which is cooperable with an image formed on a cathode ray tube screen. The position indicated by the light pen is normally displayed on the screen by means of an increased brightness of the indicated image portion. Data can be input to a computer or the like using such a light pen. In computer aided design systems the light pen may be used in conjunction with an instruction panel which may either be a seperate tablet or be a portion of the screen display. In CAD systems it is normally the object of the system to build up or modify the image on the screen, which is not therefore fixed.

Another device which allows information to be input into a computer from a display surface ─────────── is a digitizing table which consists of a plastics surface in which two mutually perpendicular sets of conductors are embedded to form a network. The position of a cursor which includes a conducting coil, on the table can be determined by continually scanning the wires with an electric current thereby generating a moving magnetic field.This field is detected by the coil in the cursor and therefore the position of the cursor on the table can be determined.

Other devices are known which will display the position of an indicated object. For example the position of various places of interest can be indicated on a map by light bulbs, each of which can be illuminated when a push button labelled with the name of the place of interest is depressed. Such a device is limited in the number of locations it can display in accordance with the disposition of the light bulbs.

Another type of display device is described in GB 2027240 A. This device consists of a scanned array of LEDs which interact with a light pen. Positions may be displayed by permanently illuminating a selected LED. An image may be placed over the array of LEDs by using a customised transparent overlay on which the image is carried.

The present invention is concerned with applications where it is desired to input information in relation to an ordinary map or drawing, for example, an Ordnance Survey map , as would normally be used by military personnel in exercises or operations. The technical problem to be solved by the present invention is to input , subsequently retrieve and/or process information relative to the fixed map or drawing and display it on the same map or drawing. It is moreover desirable to use the map or drawing in a conventional manner as , for example ,by marking it with a Chinagraph pencil or , in some embodiments , sticking pins or flags into it. As opposed to CAD applications as discussed above, the information to be input is normally of the type not itself part of or intended to modify the map or drawing but which is relative to it, for example the current position of a vehicle on the map. It is moreover desirable to provide a system which is "user-friendly" and employs a conventional information display, such as a map, for both inputting and outputting of data.

By an ordinary map or drawing is meant one that requires no special modification for use with the interactive display device of the invention.

The interactive display device of the present invention is characterised in that the surface is a supporting surface for an ordinary map or drawing providing said image which is fixed, and in that said display means is operable under the control of the instruction means to display information relative to said map or drawing thereon. The above defined interactive display device is advantageous in that it allows input and output of positional data on an ordinary map or drawing supported on the surface in a simple to use manner.

Preferably the instructing means is a panel mounted on the surface and cooperable with said indicating means to store data and control the display means. It is further advantageous to be able to use the same indicating means to operate the instruction panel as well as to indicate positions on the map or drawing.

Preferably, the display means comprises means for generating a collimated light beam, first and second deflecting means for deflecting the light beam, said deflecting means being rotatable about first and second, mutually perpendicular axes, said deflecting means being movable under control of the control and storage means to orientations such as to position the location at which the light beam falls on said surface to indicate said selected position thereon.

The present invention further provides an interactive control and display device comprising a map board and a pointer which electrically interact together when said pointer is positioned on said board to record the pointer position in control and storage means, and means under the control of the control and storage means for positioning a light spot at a selected position on said board.

An embodiment of the invention will now be described, by way of example only, with reference to the accompanying diagrammatic drawings in which:

Figure 1 is a schematic front view of an interactive display device according to the present invention,

Figure 2 is a side view of the display device of Figure 1, and

Figure 3 is a block diagram of a communications training simulator in which the display device may be incorporated.

The following description relates to the use of an interactive display device as a map board in a communications training simulator. It will be appreciated that the interactive display device to be described has various possible applications apart from the particular one described here.

A communications training simulator is a training device intended to assist the training of personnel in the use of radios. The simulator allows exercises to be carried out on a user-defined map area and communications conditions between the various radios deployed over this area to mimic those which would be experienced on the real terrain. Interference or similar effects may be added to make the electromagnetic environment as complex as desired.

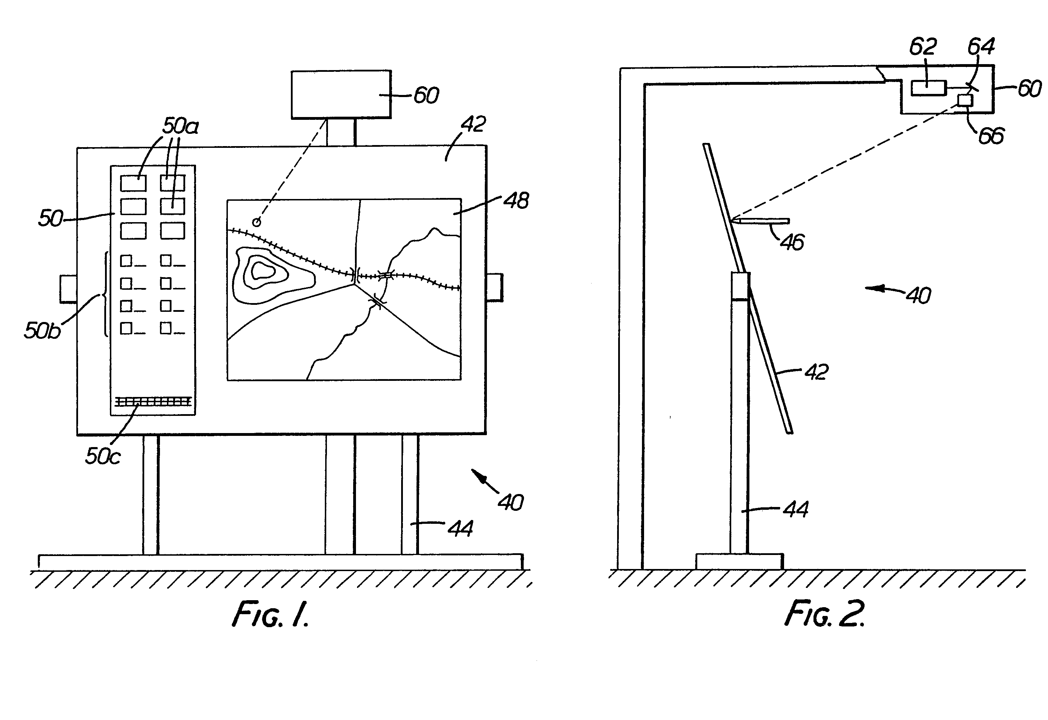

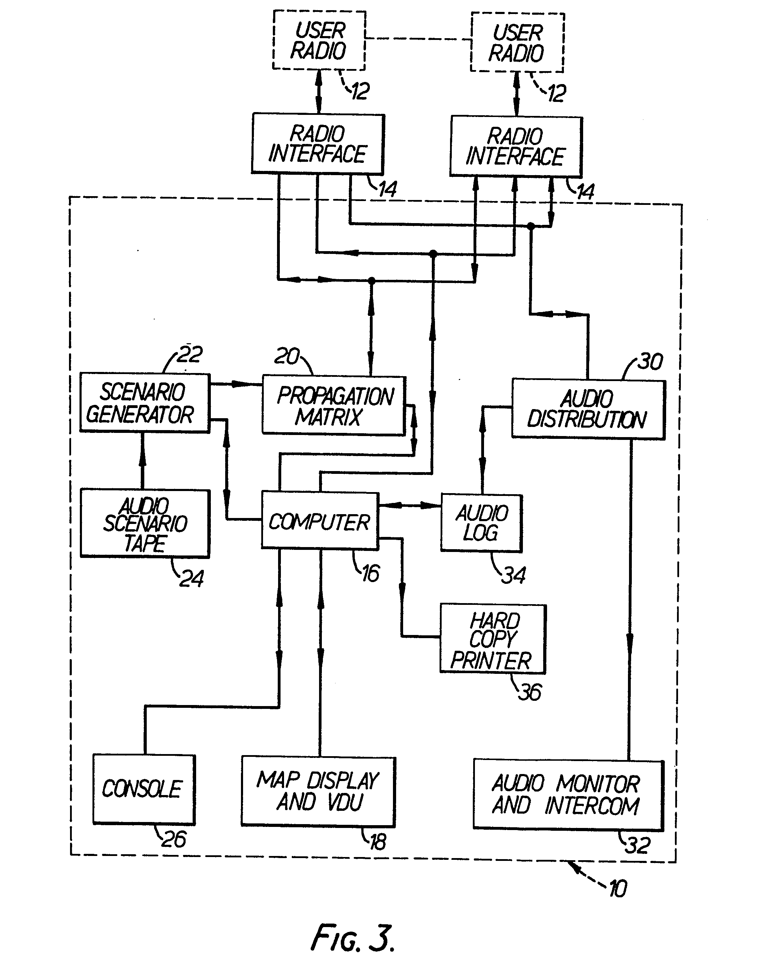

In order to achieve this the simulator, which is illustrated in the block diagram of Figure 3, comprises a control centre 10 to which the various user radios 12 are connected by cables coupled to the users' radio by interface units 14. The control centre includes a programmed computer 16 which represents the main control and storage means for the simulator. Connected to this computer 16 and under its control is a map display and VDU 18 which includes an interactive map display device illustrated in more detail in Figures 1 and 2 and which will be described later. The computer is also programmed to control the communications between the various user radios 12 by means of a propagation matrix 20. This propagation matrix sets attenuation factors between every pair of radios that may wish to communicate and may also introduce interference from the scenario generator 22 which is fed by an audio scenario tape 24. A console 26 allows a member of an exercise control team to decide what interference is to be employed. An exercise controller is enabled to talk to the user radio operators by an intercom channel 32 to initially establish their positions and to issue exercise orders. The audio communications on this intercom and on the radios may be logged by unit 34. A hard copy printer 36 is provided to enable a print-out listing the various occurrances during the exercise to be produced. This print-out can be used during an exercise debriefing with the operators of the user radios to establish the lessons to be learned from the exercise.

The block 18 in the diagram of the communications training simulator of Figure 3 represents an interactive display device 40 as shown in Figures 1 and 2 together with a VDU (not illustrated).

The display device 40 consists of a digitizing table 42 which is mounted on a support 44 at a suitable angle to the vertical. The digitizing table 42 is provided with a cursor in the form of a pen or pointer 46 which when touched at a desired position on the board produces an output to the control and storage means 16. This output consists of data representing the position of the pen on the board. The board has mounted on it a map 48 and an instruction panel 50. The map is an ordinary Ordnance Survey map of the exercise area and is supported on the digitizing table which provides a rigid support so that the map can be written on with a Chinagraph pencil in a conventional manner. The map may be spaced from the surface of the table a small distance by , for example a cork backing sheet , to enable pins or flags to be stuck into the map. The thickness of the sheet is limited by the maximum spacing permitted by the design of the board between the cursor and the board surface.

The instruction panel 50 has various areas 50a, 50b, and 50c for example, as shown on it. When the pointer 46 is positioned on one of these areas it indicates to the control means 16 either certain pre-programmed instructions or a variable in dependence on the particular area touched. The pre-programmed instruction sets enable the control means to carry out respective functions. Such functions may require one or more positional arguments to be input from the map 48 by the pen 46 after the area concerned has been indicated to the control means 16. Additionally, the function may require other variables as arguments which can be input from other areas on the instruction panel 50.

For example the six areas 50a shown on the panel 50 may each indicate variables representing a respective radio station. The areas 50b represent various functions which can be carried out to manipulate the radio stations or to request data about the map to be displayed either on the map itself or on the VDU.

For example, if it is desired to move one of the radio stations to a new position then function area 50b relating to the moving function is indicated by the pen 46 and then the area 50a representative of the radio station concerned is indicated by the pen 46. Finally the new position for the radio station can be indicated by the pen 46 on the map 48. If a real time movement of the position of the radio station intermediate its present position and the new position is required to be kept on the computer and also displayed on the map 48, then the route and speed of the radio station between the two locations can be identified by touching the pen 46 on the desired route nodes and at an appropriate point on a scale 50c on the instruction panel 50.

Other possible functions include an instruction to display on the map the current position of a particular radio station; an instruction to display on the VDU the profile of the terrain between two indicated map positions; and an instruction to set up and display a route between two positions for a selected radio station. The instruction panel can also be used to instruct functions to be carried out that do not result in a map display or require an input from the map.

In order to display positions on the map 48 a display means 60 is provided. This display means 60 is mounted in a fixed position relative to the map board 42. This can be effected by mounting the display means 60 on a gantry carried by the support for the map board.

The display means 60 illustrated consists of a low power laser light source 62 which produces a collimated beam of laser light which can be reflected by two mirrors 64 and 66 which are adapted to be rotatable about mutually perpendicular axes so that the beam can be directed to fall on any point on the map 48.

The control means 16 controls the drive to the mirrors 64 and 66. In order to provide a drive for the mirrors each of them is mounted on a spindle defining its axis of rotation. Each spindle is attached to a rotatable armature core which carries a current coil and is mounted on a torsion bearing in a magnetic field provided, for example, by two permanent magnetic poles. The control means 16 controls the amount of current fed to the current coil of each of these galvanometer drives to determine the orientation which is taken up by the spindle so that the torque provided by the bearing balances the magnetic force on the coil. Thus the orientation of the mirrors may be varied.

It would be possible for the control means to calculate the required orientations of both the mirrors to direct the beam to a desired position on the map 48 by geometrical methods. However, it is preferred to use an interpolation technique to control the output currents to the galvanometer drives of the mirrors.

Accordingly, before the control and display device is first used, it has to be calibrated. In order to achieve this the current supplies to the galvanometer drive mechanisms are manually adjusted to bring the light beam spot on the map board, in turn, to an array of predetermined reference points on the map. Typically sixteen reference points arranged in a 4 x 4 array on the surface of the map are employed. Once this information has been fed into the control and storage means 16, the required currents to establish the position of the light beam at any desired point on the map can be linearly interpolated from the closest reference points of the array.

The optimum number of reference points depends on the size of the map area over which the laser spot has to be able to travel and the accuracy required. For an acceptable degree of accuracy, for example the spot to be within ± 5mm of the desired position , the reference points should be no more than 25cm apart. If a greater number of reference points is employed the accuracy of the beam position will increase.It will be appreciated that if the light beam is being positioned at a point on the display surface which is near the top, the change in vertical position of the light spot for a given angular shift in the orientation of the mirror which rotates about a horizontal axis is less than if the light beam is directed at a point lower down the surface. Accordingly it may be necessary to position the reference points more closely together in the vertical direction in the lower region of the surface to provide the same accuracy over the whole surface. Alternatively it is usually more convenient to provide an array in which the reference points are spaced uniformly but more widely in the horizontal than the vertical direction on the surface, the spacings being chosen to give the required minimum accuracy in the lower region of the surface.

It will be appreciated that instead of a low power laser 62 an ordinary light source can be employed together with a lens system to produce a finely collimated beam. Moreover other optical systems can be used to reflect or defract the beam over the surface of the map 48 in place of the two mirrors 64, 66 described. One alternative system for the display means described is a raster scanned cathode ray tube which is provided in conjunction with an optical system to project the image formed on the screen of the cathode ray tube onto the display surface. Therfore , in order to indicate a selected position on the surface , an image would be formed at the corresponding point on the cathode ray tube screen. In this way several positions could be indicated by different letters, words or symbols.

Operation of the display means 60 can be initiated by touching one or more of the function areas 50b together with one of the areas 50a, if appropriate. In this way the position of one of the radio stations can be displayed and if required altered using the same control and display device.

It will be appreciated that a further display device, such as the VDU of block 18, is also advantageously available in association with the described interactive control and display device. This VDU can be used to display information relative to the exercise being simulated which cannot be conveniently displayed on the map 48. For example the terrain profile between two indicated locations on the map is conveniently displayed on the VDU. Preferably the VDU is located adjacent the control and display device 40 so that a single operator can observe information on both display devices.

Although only a relatively simple instruction panel 50 has been shown, it is possible to provide an instruction panel of any desired complexity to include all the functions and variables (such as radio station identifiers) to be used during the course of the operation of the control and display device.

Whilst a keyboard could be used to input instructions to the control and storage means 16 it is preferred to use an instruction panel as described as this enables the exercise controller to carry out most of his control operations whilst observing the map and with the assistance of the pen 46 which requires no special skill to use.

The described interactive display device can be used in a large variety of other applications apart from in the communications simulator as described above. For example it could be used in teaching applications for a wide variety of subjects, as well as for the playing of games.

It will also be appreciated that instead of the digitizing table as the sensitive supporting surface , other techniques may be employed to detect the position of the pointer on the surface. For example light sources and sensors may be arranged about the periphery of the board to define a network of intersecting light beams.    The position of the pointer can be detected by the light beams interrupted by it.

8213:17PM2

CLAIMS

1. An interactive display (40) device comprising a surface (42) for carrying an image(48), instruction means(50), control and storage means(16), indicating means (46) cooperable with the surface (42) and said instruction means (50) to store data relating to the image(48), and display means (60)for displaying data on the image, characterised in that the surface (42) is a supporting surface for an ordinary map or drawing (48) providing said image which is fixed, and in that said display means (60) is operable under the control of the instruction means (50) to display information relative to said map or drawing (48)thereon.

2. A display device (40) as claimed in claim 1, further characterised in that said instruction means (50) is a panel mounted on the surface (42) and cooperable with said indicating means (46) to store data and control the display means (60).

3. A display device (40) as claimed in claim 1 or 2, further characterised in that the display means (60) comprises means for generating a collimated light beam(62) , first and second deflecting means (64 & 66) for deflecting the light beam, said deflecting means (64 & 66) being rotatable about first and second, mutually perpendicular axes, said deflecting means (64 & 66) being movable under control of the control and storage means (16) to orientations such as to position the location at which the light beam falls on said surface (42) to indicate said selected position thereon.

4. A display device (40) as claimed in claim 3, characterised in that it further comprises galvanometer drive means for each of said deflecting means (64 & 66), said control and storage means (16) controlling the current supplied to each of said drive means to determine its orientation.

5. A display device (40) as claimed in claim 4, characterised in that it further comprises means for manually controlling the current supply to the respective drive means to calibrate the display means (60) by positioning the location at which the light beam falls on the surface at a plurality of reference points in turn, said control and storage means (16) being adapted to control the orientations of the deflecting means (64 & 66) by an interpolation technique using stored data relating to the orientations of the deflecting means (64 & 66) when the light beam falls on the reference points.

6. A display device (40) as claimed in claim 3,4, or 5,characterised in that said deflecting means (64 &66) are mirrors.

7. A display device (40) as claimed in any one of claims 3 to 7,characterised in that the light beam generating means (62) comprises a laser.

8. A display device (40) as claimed in any one of the preceding claims , characterised in that said instruction means (50) comprises predefined areas (50a, 50b & 50c) on said surface (42) each of which, when indicated by the indicating means(46) is interpreted by the control and storage means (16) as programmed instructions.

9. An interactive display device comprising a map board (42) and a pointer (46) which electrically interact together when said pointer (46) is positioned on said surface (42)to record the pointer position in control and storage means(16), and means (60) under the control of the control and storage means for positioning a light spot at a selected position on said surface(42).

FIG. 1.

FIG. 2.

0103973

2/2

0103973

FIG. 3.